# EUROPÄISCHE PATENTSCHRIFT

(11) **EP 4 385 047 B1**
(45) Veröffentlichungstag und Bekanntmachung des Hinweises auf die Patenterteilung: **30.07.2025**
(21) Anmeldenummer: 22761142.3
(22) Anmeldetag: 03.08.2022
(51) Int. Cl.: H01F 27/28, H01F 27/02, H01F 27/29, H01F 27/30, H01F 27/32, G01P 3/481

(54) **IMPULSDRAHT-MODUL UND VERFAHREN ZUR HERSTELLUNG EINES IMPULSDRAHT-MODULS**
IMPULSE-WIRE MODULE AND METHOD FOR PRODUCING AN IMPULSE-WIRE MODULE
MODULE À FIL D'IMPULSION ET PROCÉDÉ DE FABRICATION D'UN MODULE À FIL D'IMPULSION

(30) Priorität: 13.08.2021 DE 102021121065
(43) Veröffentlichungstag der Anmeldung: 19.06.2024
(73) Patentinhaber: Fraba B.V., 6416 SG Heerlen (NL)
(72) Erfinder: LÖKEN, Michael, 52428 Jülich (DE)
(74) Vertreter: terpatent PartGmbB
(86) Internationale Anmeldenummer: PCT/EP2022/071814
(87) Internationale Veröffentlichungsnummer: WO 2023/016885

(56) Entgegenhaltungen:
- CN-Y- 201 331 360
- DE-A1- 102015 000 299
- GB-A- 2 100 937
- US-A- 4 743 780
- US-A1- 2019 316 934

## Beschreibung

Die vorliegende Erfindung betrifft ein Impulsdraht-Modul, umfassend ein Modulgehäuse, das eine Gehäusekammer definiert, eine Drahtwicklung, die durch einen Wicklungsdraht gebildet ist und zumindest teilweise innerhalb der Gehäusekammer angeordnet ist, einen Impulsdraht, der sich zumindest bereichsweise innerhalb der Drahtwicklung erstreckt, und eine Kontaktierungsvorrichtung zur externen elektrischen Kontaktierung des Impulsdraht-Moduls, die an dem Modulgehäuse befestig ist und elektrisch mit der Drahtwicklung verbunden ist.

Derartige Impulsdraht-Module - auch als Wiegand-Module bezeichnet - werden beispielsweise in Magnet-basierten Drehwinkelmessvorrichtungen zur Erfassung eines von einem Erregermagneten erzeugten Erregermagnetfelds verwendet.

Aus der DE 10 2020 100 732 A1 ist ein derartiges Impulsdraht-Modul bekannt, wobei die Kontaktierungsvorrichtung ein Verbindungselement aufweist, das mit dem Wicklungsdraht umwickelt ist, um die Kontaktierungsvorrichtung elektrisch mit der Drahtwicklung zu verbinden. Das offenbarte Impulsdraht-Modul ist mehrteilig aufgebaut, wodurch eine automatisierte Bewicklung des Verbindungselements mit dem Wicklungsdraht ermöglicht wird. Auf Grund des komplexen mehrteiligen Aufbaus sind die Herstellungskosten des offenbarten Impulsdraht-Moduls jedoch relativ hoch.

Aus der CN 201 331 360 Y ist ein weiteres Impulsdraht-Modul eingangs genannter Art bekannt.

Aus der GB 2 100937 A ist ein Impulsdraht-Modul eingangs genannter Art bekannt, bei dem der Wicklungsdraht mit der Kontaktierungsvorrichtung verlötet ist.

Aus der US 4 743 780 A ist ein Impulsdraht-Modul eingangs genannter Art bekannt, bei dem der Wicklungsdraht mit der Kontaktierungsvorrichtung verschweißt ist.

Aus der US 2019/316934 A1 ist ein Impulsdraht-Modul bekannt, bei dem die Enden des Wicklungsdrahts aus dem Modulgehäuse herausgeführt sind.

Es stellt sich vor diesem Hintergrund die Aufgabe, eine kostengünstige Herstellung eines Impulsdraht-Moduls zu ermöglichen.

Diese Aufgabe wird durch ein Impulsdraht-Modul mit den Merkmalen des Anspruchs 1 gelöst.

Das erfindungsgemäße Impulsdraht-Modul umfasst ein Modulgehäuse, das eine Gehäusekammer definiert. Typischerweise besteht das Modulgehäuse aus Kunststoff und ist ein Spritzgussteil. Das Modulgehäuse ist typischerweise im Wesentlichen trogförmig ausgebildet und definiert folglich eine einseitig (typischerweise auf einer Unterseite des Modulgehäuses) offene Gehäusekammer. Typischerweise umfasst die Gehäusekammer einen zylindersegmentförmigen Abschnitt zur Aufnahme der Drahtwicklung. Das Modulgehäuse kann spezielle Strukturen zur Ausrichtung und Positionierung des Modulgehäuses bei der Montage aufweisen.

Das erfindungsgemäße Impulsdraht-Modul umfasst ferner eine Drahtwicklung und einen Impulsdraht. Die Drahtwicklung ist durch einen Wicklungsdraht gebildet und zumindest teilweise innerhalb der Gehäusekammer angeordnet. Vorzugsweise ist die Drahtwicklung als eine sogenannte Luftspule ohne Wicklungskern ausgebildet. Der Impulsdraht erstreckt sich zumindest bereichsweise innerhalb der Drahtwicklung, das heißt, dass die Drahtwicklung den Impulsdraht zumindest bereichsweise radial umschließt. Vorzugsweise ist ein Innendurchmesser der Spule geringfügig größer als ein Außendurchmesser des Impulsdrahts, sodass der Impulsdraht durch die Drahtwicklung in radialer Richtung positioniert und gelagert ist. Typischerweise ist an beiden axialen Seiten der Drahtwicklung ein ferritisches Element angeordnet, durch das jeweils ein Ende des Impulsdrahts gehalten wird. Die ferritischen Elemente sind an dem Modulgehäuse befestigt, wobei die ferritischen Elemente vorzugsweise durch das Modulgehäuse umspritzt sind. Der Impulsdraht ist vorzugsweise über einen unter UV-Licht aushärtenden, relativ weichen Klebstoff, beispielsweise Silikon, mit den beiden ferritischen Elementen verklebt. Der Impulsdraht ist magnetisch bistabil und wird auch als Wiegand-Draht bezeichnet. Unter Einwirkung eines externen Magnetfelds invertiert sich die Magnetisierungsrichtung des Impulsdrahts schlagartig, wodurch in der Drahtwicklung ein kurzer Spannungspuls erzeugt wird. Das erfindungsgemäße Impulsdraht-Modul umfasst ferner mindestens eine Kontaktierungsvorrichtung zur externen elektrischen Kontaktierung des Impulsdraht-Moduls. Die Kontaktierungsvorrichtung ist an dem Modulgehäuse befestigt, wobei die Kontaktierungsvorrichtung durch das Modulgehäuse umspritzt ist. Die Kontaktierungsvorrichtung ist elektrisch mit der Drahtwicklung verbunden, sodass die in der Drahtwicklung erzeugten Spannungspulse über die Kontaktierungsvorrichtung von extern abgreifbar sind. Typischerweise umfasst die Kontaktierungsvorrichtung mehrere Kontaktierungselemente, auch als Kontaktbeinchen oder Kontaktpins bezeichnet, die in einem definierten Abstand zueinander angeordnet sind, um eine Montage des Impulsdraht-Moduls auf einer standardisierten Leiterplatte zu ermöglichen.

Vorzugsweise sind die Kontaktierungselemente auf der Unterseite des Modulgehäuses angeordnet und zur Montage auf der Oberfläche einer Leiterplatte ausgebildet, sodass das Impulsdraht-Modul als sogenanntes "Surface-Mounted Device" (SMD) ausgebildet ist.

Erfindungsgemäß ist der Wicklungsdraht über eine stoffschlüssige Verbindung mit der Kontaktierungsvorrichtung verbunden. Die stoffschlüssige Verbindung kann insbesondere eine Schweißverbindung oder eine Lötverbindung sein. Grundsätzlich kann die stoffschlüssige Verbindung jedoch jede beliebige Art von stoffschlüssiger Verbindung sein, die eine elektrische Verbindung zwischen dem Wicklungsdraht und der Kontaktierungsvorrichtung schafft. Die stoffschlüssige Verbindung kann grundsätzlich an jedem beliebigen Bereich der Kontaktierungsvorrichtung angeordnet sein. Vorzugsweise weist die Kontaktierungsvorrichtung jedoch einen speziell konfigurierten Verbindungsbereich für die Ausbildung der stoffschlüssigen Verbindung mit dem Wicklungsdraht auf. Vorzugsweise ist der Wicklungsdraht ausschließlich über die stoffschlüssige Verbindung mit der Kontaktierungsvorrichtung verbunden, wobei durchaus vorstellbar ist, dass die stoffschlüssige Verbindung zum Schutz vor Umgebungseinflüssen durch eine Schutzschicht, beispielsweise ein Lack oder eine Vergussmasse, umgeben sein kann. Die Schutzschicht liefert hierbei jedoch keinen signifikanten Beitrag zur Verbindung zwischen dem Wicklungsdraht und der Kontaktierungsvorrichtung, sondern dient lediglich dem Schutz der stoffschlüssigen Verbindung. Die stoffschlüssige Verbindung schafft eine zuverlässige Verbindung zwischen dem Wicklungsdraht und der Kontaktierungsvorrichtung, welche mittels entsprechender Maschinen auf relativ einfache Weise automatisiert hergestellt werden kann. Dies ermöglich eine besonders kostengünstige Herstellung des erfindungsgemäßen Impulsdraht-Moduls.

Erfindungsgemäß umfasst die Kontaktierungsvorrichtung einen Grundkörper, der in das Modulgehäuse eingelassen ist, und ein Verbindungselement, das aus dem Modulgehäuse herausragt und an dem die stoffschlüssige Verbindung mit dem Wicklungsdraht angeordnet ist. Das Verbindungselement ist hierbei erfindungsgemäß einstückig mit dem Grundkörper ausgebildet. Der in das Modulgehäuse eingelassene Grundkörper schafft eine zuverlässige Befestigung der Kontaktierungsvorrichtung am Gehäuse. Erfindungsgemäß ist der Grundkörper vollständig oder zumindest teilweise durch das Modulgehäuse umspritzt. Typischerweise sind an den Grundkörper auch mehrere Kontaktierungselemente angeformt, die ebenfalls aus dem Modulgehäuse herausragen und der externen elektrischen Kontaktierung des Impulsdraht-Moduls dienen. Das Verbindungselement ist vorzugsweise auf einer der Drahtwicklung zugewandten Seite des Grundköpers angeordnet. Das aus dem Modulgehäuse herausragende Verbindungselement ist gut zugänglich und ermöglicht eine einfache Herstellung der stoffschlüssigen Verbindung mit dem Wicklungsdraht.

Vorzugsweise ist die Kontaktierungsvorrichtung zumindest in dem Verbindungsbereich, an dem die stoffschlüssige Verbindung zwischen dem Wicklungsdraht und der Kontaktierungsvorrichtung angeordnet ist, verzinnt, also mit Zinn beschichtet. Dies ermöglicht eine besonders einfache und zuverlässige Herstellung der stoffschlüssigen Verbindung beispielsweise mittels Thermokompressionsschweißen oder Löten.

Vorteilhafterweise ist die stoffschlüssige Verbindung zwischen dem Wicklungsdraht und der Kontaktierungsvorrichtung innerhalb der Gehäusekammer angeordnet und ist die Gehäusekammer derart mit einer Vergussmasse verfüllt, dass die stoffschlüssige Verbindung zwischen dem Wicklungsdraht und der Kontaktierungsvorrichtung durch die Vergussmasse umschlossen ist. Durch die Vergussmasse ist die stoffschlüssige Verbindung zuverlässig vor Umwelteinflüssen, insbesondere vor Feuchtigkeit und mechanischer Einwirkung, geschützt. Ferner werden durch die Vergussmasse auch die Drahtwicklung und der Impulsdraht zuverlässig innerhalb der Gehäusekammer fixiert und ebenfalls vor Umwelteinflüssen geschützt. Dies schafft ein besonders langlebiges Impulsdraht-Modul. Vorzugsweise ist die Vergussmasse unter UV-Licht aushärtend, um ein relativ schnelles und zuverlässiges Aushärten der Vergussmasse zu ermöglichen.

Besonders bevorzugt ist das Verbindungselement derart umgelegt, dass es an einer Oberfläche des Modulgehäuses anliegt. Dadurch, dass das Verbindungselement umgelegt ist, wird auf einfache Weise eine relativ große Verbindungsfläche für das Herstellen der stoffschlüssigen Verbindung bereitgestellt. Ferner ist das Verbindungselement - und somit auch die darauf angeordnete stoffschlüssige Verbindung zum Wicklungsdraht - durch das Umlegen relativ nah am Modulgehäuse angeordnet und somit relativ gut vor externen mechanischen Einflüssen geschützt. Vorzugsweise ist die Oberfläche des Modulgehäuses, an der das Verbindungselement anliegt, derart innerhalb der Gehäusekammer ausgebildet, dass das Verbindungselement und die darauf angeordnete stoffschlüssige Verbindung zum Wicklungsdraht innerhalb der Gehäusekammer angeordnet sind.

Vorteilhafterweise umfasst das Impulsdraht-Modul eine weitere Kontaktierungsvorrichtung, die elektrisch mit der Drahtwicklung verbunden ist, wobei der Wicklungsdraht über eine weitere stoffschlüssige Verbindung mit der weiteren Kontaktierungsvorrichtung verbunden ist. Typischerweise sind die beiden Kontaktierungsvorrichtungen hierbei auf gegenüberliegenden lateralen Seiten der Drahtwicklung angeordnet und jeweils mit einem Ende des Wicklungsdrahts verbunden, sodass die in der Drahtwicklung erzeugten Spannungspulse über die beiden separaten Kontaktierungsvorrichtungen auf einfache Weise von extern abgegriffen werden können. Vorzugsweise sind die beiden Kontaktierungsvorrichtung identisch ausgebildet, sodass für beide Kontaktierungsvorrichtungen das gleiche Bauteil verwendet werden kann.

Ein Verfahren zur Herstellung des erfindungsgemäßen Impulsdraht-Moduls umfasst die folgenden Verfahrensschritte:
- Einsetzen der Drahtwicklung in das Modulgehäuse,
- Führen des Wicklungsdrahts zu der Kontaktierungsvorrichtung, und
- Herstellen der stoffschlüssigen Verbindung zwischen dem Wicklungsdraht und der Kontaktierungsvorrichtung.

Die Drahtwicklung wird in einer entsprechenden Wicklungsmaschine hergestellt, wobei an beiden Enden der Drahtwicklung jeweils ein ausreichend langer Verbindungsabschnitt zur Verbindung der Drahtwicklung mit der Kontaktierungsvorrichtung vorhanden ist. Die Drahtwicklung wird als fertiges Bauteil in das Modulgehäuse eingesetzt.

Anschließend wird der Verbindungsabschnitt des Wicklungsdrahts zu der Kontaktierungsvorrichtung, im Speziellen zum Verbindungsbereich der Kontaktierungsvorrichtung, geführt.

Mittels eines geeigneten Verfahrens, beispielsweise mittels eines Schweißverfahrens oder Lötverfahrens, wird dann die stoffschlüssige Verbindung zwischen dem Wicklungsdraht und der Kontaktierungsvorrichtung hergestellt, um den Wicklungsdraht dauerhaft elektrisch leitend mit der Kontaktierungsvorrichtung zu verbinden. Typischerweise wird anschließend ein auf einer von der Drahtwicklung abgewandten Seite des Verbindungsbereichs der Kontaktvorrichtung überstehender Teil des Wicklungsdrahts abgetrennt. Vorzugsweise ist der Wicklungsdraht nach dem Herstellen der stoffschlüssigen Verbindung ausschließlich über die stoffschlüssige Verbindung an der Kontaktierungsvorrichtung befestigt.

Vorteilhafterweise wird die stoffschlüssige Verbindung zwischen dem Wicklungsdraht und der Kontaktierungsvorrichtung durch eine entsprechend eingerichtete Maschine automatisiert hergestellt. Hierdurch wird eine besonders kostengünstige Herstellung des Impulsdraht-Moduls ermöglicht.

Vorzugsweise wird die stoffschlüssige Verbindung zwischen dem Wicklungsdraht und der Kontaktierungsvorrichtung mittels Thermoschweißen, besonders bevorzugt mittels Thermokompressionsschweißen, hergestellt. Thermoschweiß-Maschinen sind relativ kostengünstig und erlauben die Herstellung relativ kleinflächiger Schweißverbindungen. Dies ermöglicht eine kostengünstige und zuverlässige Herstellung des Impulsdraht-Moduls.

Vorteilhafterweise wird die Gehäusekammer des Modulgehäuses nach dem Herstellen der stoffschlüssigen Verbindung zwischen dem Wicklungsdraht und der Kontaktierungsvorrichtung derart mit einer Vergussmasse verfüllt, dass die stoffschlüssige Verbindung zwischen dem Wicklungsdraht und der Kontaktierungsvorrichtung durch die Vergussmasse umschlossen ist. Dies schafft ein besonders langlebiges Impulsdraht-Modul.

Vorzugsweise wird die Vergussmasse nach dem Verfüllen der Gehäusekammer durch Bestrahlen mit UV-Licht relativ schnell und zuverlässig ausgehärtet.

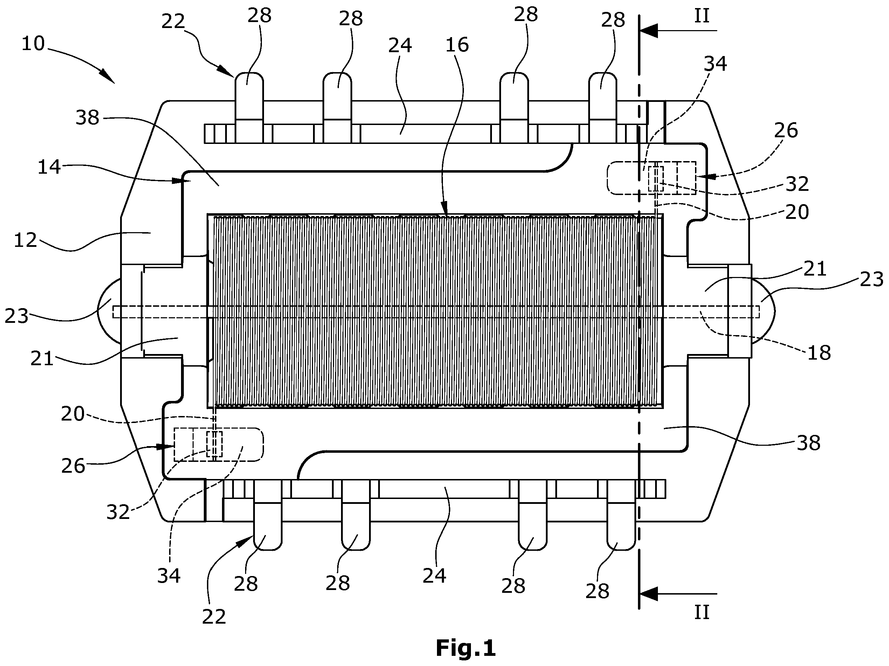

Ein Ausführungsbeispiel eines erfindungsgemäßen Impulsdraht-Moduls wird nachfolgend anhand der beigefügten Figuren beschrieben, wobei
Figur 1 eine Draufsicht auf eine Unterseite eines erfindungsgemäßen Impulsdraht-Moduls zeigt, und

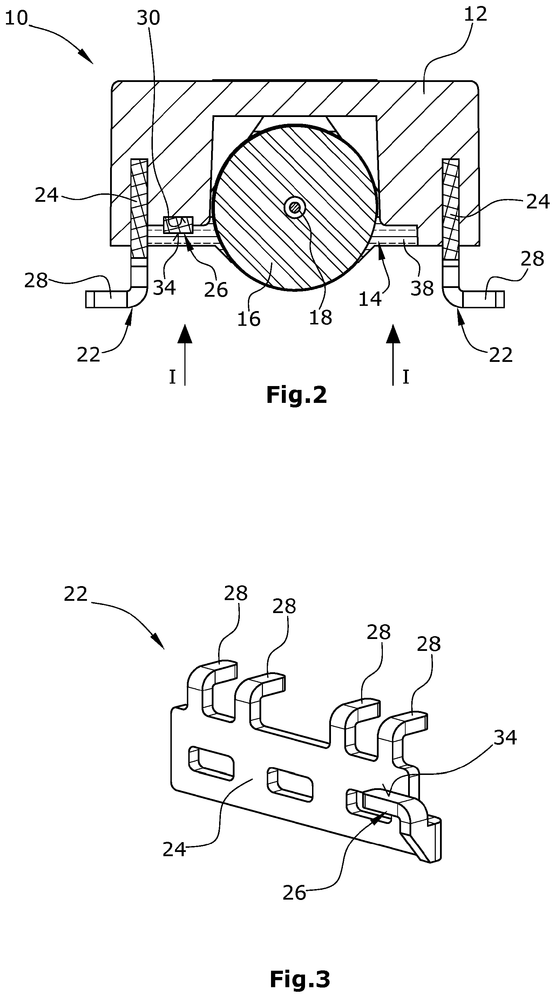

Figur 2 eine Schnittdarstellung des Impulsdraht-Moduls aus Figur 1 entlang der eingezeichneten Linie II-II zeigt, und
Figur 3 eine Kontaktierungsvorrichtung des Impulsdraht-Moduls aus Figur 1 zeigt.

Die Figuren zeigen ein Impulsdraht-Modul 10 mit einem Modulgehäuse 12, das eine Gehäusekammer 14 definiert. Das Modulgehäuse 12 ist im vorliegenden Ausführungsbeispiel ein im Wesentlichen trogförmiges Spritzgussteil aus Kunststoff, sodass die Gehäusekammer 14 auf der Unterseite des Modulgehäuses 12 offen ist.

Das Impulsdraht-Modul 10 umfasst ferner eine Drahtwicklung 16 und einen Impulsdraht 18, der sich in axialer Richtung durch die Drahtwicklung 16 hindurch erstreckt. Der Impulsdraht 18 ist also in einem mittleren Bereich radial von der Drahtwicklung 16 umschlossen. Die Drahtwicklung 16 ist durch einen Wicklungsdraht 20 gebildet und teilweise innerhalb der Gehäusekammer 14 angeordnet. Die Drahtwicklung 16 ist im vorliegenden Ausführungsbeispiel als eine Luftspule ausgebildet und weist einen Innendurchmesser auf, der geringfügig größer ist als ein Außendurchmesser des Impulsdrahts 16, sodass der Impulsdraht 16 durch die Drahtwicklung 14 in radialer Richtung positioniert und gelagert ist. An beiden axialen Enden der Drahtwicklung 14 ist jeweils ein ferritisches Element 21 angeordnet, in das jeweils ein axiales Ende des Impulsdrahts 18 eintaucht. Im vorliegenden Ausführungsbeispiel sind die beiden ferritischen Elemente 21 durch das Modulgehäuse 12 umspritzt und sind die beiden Enden des Impulsdrahts 18 jeweils über eine Klebeverbindung 23 am jeweiligen ferritischen Element 21 befestigt. Die Klebeverbindungen 23 bestehen im vorliegenden Ausführungsbeispiel aus einem durch UV-Licht aushärtenden und relativ weichen Material, im Speziellen aus Silikon.

Das Impulsdraht-Modul 10 umfasst im vorliegenden Ausführungsbeispiel zwei identische, jeweils einstückig ausgebildete Kontaktierungsvorrichtungen 22 zur externen elektrischen Kontaktierung des Impulsdraht-Moduls 10. Die beiden Kontaktierungsvorrichtungen 22 sind im vorliegenden Ausführungsbeispiel vollständig verzinnt, also vollständig mit Zinn beschichtet. Die beiden Kontaktierungsvorrichtungen 22 sind auf gegenüberliegenden Seiten der Drahtwicklung 16 angeordnet und umfassen jeweils einen Grundkörper 24, ein Verbindungselement 26 und im vorliegenden Ausführungsbeispiel vier Kontaktierungselemente 28. Die beiden Kontaktierungsvorrichtungen 22 sind im vorliegenden Ausführungsbeispiel durch das Modulgehäuse 12 derart umspritzt, dass die Grundkörper 24 der beiden Kontaktierungsvorrichtungen 22 jeweils in einer Seitenwand des Modulgehäuses 12 eingelassen sind und die Verbindungselemente 26 sowie die Kontaktierungselemente 28 der beiden Kontaktierungsvorrichtungen 22 jeweils auf der Unterseite aus dem Modulgehäuse 12 herausragen.

Die Verbindungselemente 26 der beiden Kontaktierungsvorrichtungen 22 sind im vorliegenden Ausführungsbeispiel jeweils derart umgelegt, dass sie an einer Oberfläche 30 des Modulgehäuses 12 anliegen, die innerhalb der Gehäusekammer 14 ausgebildet ist, und dass sie jeweils vollständig innerhalb der Gehäusekammer 14 angeordnet sind. Die Verbindungselemente 26 sind jeweils über eine stoffschlüssige Verbindung 32 elektrisch mit einem Ende des Wicklungsdrahts 20 verbunden, sodass die beiden Kontaktierungsvorrichtungen 22 jeweils elektrisch mit einer Seite der Drahtwicklung 16 verbunden sind. Der Wicklungsdraht 20 ist hierbei ausschließlich über die stoffschlüssige Verbindung 32 an der jeweiligen Kontaktierungsvorrichtungen 22 befestigt. Die stoffschlüssigen Verbindungen 32 sind hierbei jeweils an einem Verbindungsbereich 34 der Verbindungselemente 26 angeordnet, der durch die von der Oberfläche 30 des Modulgehäuses 12 abgewandte Oberfläche 32 des Verbindungselements 26 gebildet ist.

Im vorliegenden Ausführungsbeispiel ist die Gehäusekammer 14 vollständig, also bis zu einer Gehäuseunterkante 36, mit einer Vergussmasse 38 verfüllt, sodass die Verbindungselemente 26 und die auf den Verbindungsbereichen 34 der Verbindungselemente 26 angeordneten stoffschlüssigen Verbindungen 32 jeweils von der Vergussmasse 38 umschlossen sind. Die Vergussmasse 38 ist im vorliegenden Ausführungsbeispiel unter UV-Licht aushärtend.

Bei der Herstellung des Impulsdraht-Moduls 10 wird die Drahtwicklung 14 als fertiges Bauteil in die Gehäusekammer 14 des Modulgehäuses 12 eingesetzt und werden die beiden Enden des die Drahtwicklung 16 bildenden Wicklungsdrahts 20 jeweils zu dem Verbindungsbereich 34 des Verbindungselements 26 der jeweiligen Kontaktierungsvorrichtung 22 geführt.

Die stoffschlüssigen Verbindungen 32 zwischen den beiden Enden des Wicklungsdrahts 20 und der jeweiligen Kontaktierungsvorrichtung 22 werden - im vorliegenden Ausführungsbeispiel vollständig automatisiert mittels Thermokompressionsschweißen - hergestellt, um die Drahtwicklung 20 elektrisch mit den beiden Kontaktierungsvorrichtungen 22 zu verbinden.

Der Impulsdraht 18 wird nach dem Einsetzen der Drahtwicklung 16 in das Modulgehäuse 14 in die Drahtwicklung 16 eingeschoben und mit den beiden ferritischen Elementen 21 verklebt.

Die Gehäusekammer 14 wird vollständig mit flüssiger Vergussmasse 38 verfüllt, sodass die Verbindungselemente 26 und die daran angeordneten stoffschlüssigen Verbindungen 32 von der Vergussmasse 38 umschlossen sind. Die Vergussmasse 38 wird durch Bestrahlen mit UV-Licht kontrolliert ausgehärtet.

### Bezugszeichenliste

- 10: Impulsdraht-Modul
- 12: Modulgehäuse
- 14: Gehäusekammer
- 16: Drahtwicklung
- 18: Impulsdraht
- 20: Wicklungsdraht
- 21: ferritische Elemente
- 22: Kontaktierungsvorrichtungen
- 23: Klebeverbindungen
- 24: Grundkörper
- 26: Verbindungselemente
- 28: Kontaktierungselemente
- 30: Oberfläche
- 32: stoffschlüssige Verbindung
- 34: Verbindungsbereich
- 36: Gehäuseunterkante
- 38: Vergussmasse

## Patentansprüche

1. Impulsdraht-Modul (10), umfassend
- ein Modulgehäuse (12), das eine Gehäusekammer (14) definiert,
- eine Drahtwicklung (16), die durch einen Wicklungsdraht (20) gebildet ist und zumindest teilweise innerhalb der Gehäusekammer (14) angeordnet ist,
- einen Impulsdraht (18), der sich zumindest bereichsweise innerhalb der Drahtwicklung (16) erstreckt, und
- eine Kontaktierungsvorrichtung (22) zur externen elektrischen Kontaktierung des Impulsdraht-Moduls (10), die an dem Modulgehäuse (12) befestigt ist und elektrisch mit der Drahtwicklung (16) verbunden ist,
wobei der Wicklungsdraht (20) über eine stoffschlüssige Verbindung (32) mit der Kontaktierungsvorrichtung (22) verbunden ist,
**dadurch gekennzeichnet, dass** die Kontaktierungsvorrichtung (22) einen Grundkörper (24) umfasst, der zumindest teilweise durch das Modulgehäuse (12) umspritzt ist, und
wobei die Kontaktierungsvorrichtung (22) ein einstückig mit dem Grundkörper (24) ausgebildetes Verbindungselement (26) umfasst, das aus dem Modulgehäuse (12) herausragt und an dem die stoffschlüssige Verbindung (32) angeordnet ist.

2. Impulsdraht-Modul (10) nach Anspruch 1, wobei die Kontaktierungsvorrichtung (22) zumindest in einem Verbindungsbereich (34), an dem die stoffschlüssige Verbindung (32) angeordnet ist, verzinnt ist.

3. Impulsdraht-Modul (10) nach Anspruch 1 oder 2, wobei die stoffschlüssige Verbindung (32) innerhalb der Gehäusekammer (14) angeordnet ist und die Gehäusekammer (14) derart mit einer Vergussmasse (38) verfüllt ist, dass die stoffschlüssige Verbindung (32) durch die Vergussmasse (38) umschlossen ist.

4. Impulsdraht-Modul (10) nach einem der vorhergehenden Ansprüche, wobei das Verbindungselement (26) derart umgelegt ist, dass es an einer Oberfläche (30) des Modulgehäuse (12) anliegt.

5. Impulsdraht-Modul (10) nach einem der vorhergehenden Ansprüche, zusätzlich umfassend eine weitere Kontaktierungsvorrichtung (22), die elektrisch mit der Drahtwicklung (16) verbunden ist, wobei der Wicklungsdraht (20) über eine weitere stoffschlüssige Verbindung (32) mit der weiteren Kontaktierungsvorrichtung (22) verbunden ist.

## Claims

1. Impulse wire module (10), comprising
- a module housing (12) which defines a housing chamber (14),
- a wire winding (16) which is formed by a winding wire (20) and which is arranged at least partially within the housing chamber (14),
- an impulse wire (18) which extends at least in part within the wire winding (16), and
- a contacting device (22) for external electrical contacting of the impulse wire module (10), which is fastened to the module housing (12) and is electrically connected to the wire winding (16),
wherein the winding wire (20) is connected to the contacting device (22) via a material bond (32),
**characterized in that**
the contacting device (22) comprises a main body (24) which is at least partially overmolded by the module housing (12), and
wherein the contacting device (22) comprises a connecting element (26) which is formed integrally with the main body (24), which projects out of the module housing (12) and on which the material bond (32) is arranged.

2. Impulse wire module (10) according to claim 1, wherein the contacting device (22) is tinned at least in a connection area (34) at which the material bond (32) is arranged.

3. Impulse wire module (10) according to claim 1 or 2, wherein the material bond (32) is arranged within the housing chamber (14) and the housing chamber (14) is filled with a potting compound (38) such that the material bond (32) is surrounded by the potting compound (38).

4. Impulse wire module (10) according to one of the preceding claims, wherein the connecting element (26) is bent down in such a way that it is in contact with a surface (30) of the module housing (12).

5. Impulse wire module (10) according to one of the preceding claims, additionally comprising a further contacting device (22) which is electrically connected to the wire winding (16), wherein the winding wire (20) is connected to the further contacting device (22) via a further material bond (32).

## Revendications

1. Module de fil d'impulsion (10) comprenant
- un boîtier de module (12) définissant une chambre de boîtier (14),
- un enroulement de fil (16) formé par un fil d'enroulement (20) et disposé au moins partiellement à l'intérieur de la chambre de boîtier (14),
- un fil d'impulsion (18) s'étendant au moins partiellement à l'intérieur de l'enroulement de fil (16), et
- un dispositif de mise en contact (22) pour la mise en contact électrique externe du module de fil d'impulsion (10), qui est fixé au boîtier de module (12) et relié électriquement à l'enroulement de fil (16),
le fil d'enroulement (20) étant relié au dispositif de mise en contact (22) par une liaison par liaison de matière (32),
**caractérisé en ce que**
le dispositif de mise en contact (22) comprend un corps de base (24) surmoulé au moins partiellement par le boîtier de module (12), et
le dispositif de mise en contact (22) comprend un élément de liaison (26) réalisé d'une seule pièce avec le corps de base (24), qui fait saillie du boîtier de module (12) et sur lequel est disposée la liaison par liaison de matière (32).

2. Module de fil d'impulsion (10) selon la revendication 1, le dispositif de mise en contact (22) étant étamé au moins dans une zone de liaison (34) sur laquelle est disposée la liaison par liaison de matière (32).

3. Module de fil d'impulsion (10) selon la revendication 1 ou 2, la liaison par liaison de matière (32) étant disposée à l'intérieur de la chambre de boîtier (14) et la chambre de boîtier (14) étant remplie d'une masse de scellement (38) de telle sorte que la liaison par liaison de matière (32) soit entourée par la masse de scellement (38).

4. Module de fil d'impulsion (10) selon l'une quelconque des revendications précédentes, l'élément de liaison (26) étant replié de telle sorte qu'il s'applique contre une surface (30) du boîtier de module (12).

5. Module de fil d'impulsion (10) selon l'une quelconque des revendications précédentes, comprenant en outre un autre dispositif de mise en contact (22) qui est relié électriquement à l'enroulement de fil (16), le fil d'enroulement (20) étant relié à l'autre dispositif de mise en contact (22) par une autre liaison par liaison de matière (32).
